# EUROPEAN PATENT SPECIFICATION

(11) **EP 1 838 738 B1**
(45) Date of publication and mention of the grant of the patent: **28.11.2012**
(21) Application number: 06700323.6
(22) Date of filing: 06.01.2006
(51) Int. Cl.: G01N 1/38, C08F 6/28, B01J 8/00, G01N 1/00, B01D 29/00, C08F 2/01, C08F 6/00

(54) **RECOVERY AND WASHING PROCESS FOR POLYMERS**
RÜCKGEWINNUNGS- UND WASCHVERFAHREN FÜR POLYMERE
PROCÉDÉ DE RÉCUPÉRATION ET DE LAVAGE POUR DES POLYMÈRES

(30) Priority: 19.01.2005 GB 0501102
(43) Date of publication of application: 03.10.2007
(73) Proprietor: Ineos Commercial Services UK Limited, Hampshire SO43 7FG (GB)
(72) Inventor: PRATT, David, B-3078 Everberg (BE)
(74) Representative: King, Alex
(86) International application number: PCT/GB2006/000044
(87) International publication number: WO 2006/077376

(56) References cited:
- WO-A-2004/078330
- GB-A- 837 064
- US-B1- 6 616 838
- HUIQI ZHANG, M. W. M. FIJTEN, R. HOOGENBOOM, R. REINIERKENS, U. S. SCHUBERT: "Application of a parallel synthetic approach in atom-transfer radical polymerization: set-up and feasibility demonstration" MACROMOL. RAPID COMMUN., vol. 24, no. 1, 2003, pages 81-86, XP002372559
- R. HOOGENBOOM, M. W. M. FIJTEN, M. A. R. MEIER, U. S. SCHUBERT: "Living cationic polymerizations utilizing an automated synthesizer: High-Throughput synthesis of polyoxazolines" MACROMOL. RAPID COMMUN., vol. 24, no. 1, 2003, pages 92-97, XP002372560

## Description

This invention relates to a formation, recovery and washing process for polymer materials, in particular for polymer samples produced from a high throughput experiment.

Over recent years the advent of combinatorial methods in materials science and of high throughput chemistry techniques, and in particular the growing use of robots and computers to automate catalyst and materials preparation and testing, has allowed researchers to potentially test tens to hundreds to thousands or more catalysts and materials in parallel. Much effort has gone in to developing preparation and testing apparatus for numerous types of materials and material properties (for example US 5,776,359) and, in particular, for chemical reactions of interest (for example see US 5,959,297, US 6,063,633 and US 6,306,658). However as the number of experiments it may be possible to run in parallel has increased so the bottlenecks in catalyst testing have shifted. For example, collecting, handling and storing of experimental data has become an increasingly important area. As a further example, where a researcher had previously to only make, load and test a few catalysts a day or even in a week, the researcher now has to make a much larger number of catalysts to perform the tests on. For high throughput testing of polymerisation processes, in addition to the above issues, the scale (i.e. volume of polymer material produced) has also generally decreased inversely to the increase in number of parallel experiments, giving corresponding difficulties in the handling of the materials produced.

Because of the relatively small scale of high throughput testing, small losses of polymer can cause a big influence on polymer yield. In addition, and perhaps more importantly, although smaller scale analysis methods have been devised, it is still desired to recover as much polymer as possible to ensure as much as possible is available for subsequent analysis. We have now found an improved method for recovering and washing the polymer produced.

Thus, according to the first aspect of the present invention there is provided a process for formation, recovery and washing of polymer sample from a high throughput reaction vessel, said high throughput reaction vessel being one of a plurality of high throughput reaction vessels which operate polymerisation reactions in parallel at small scale to produce a polymer sample of less than 50g (washed and dried weight), said process comprising the steps of:
a) reacting one or monomers in a batch-mode polymerisation reaction in a high throughput reaction vessel to form a polymer sample, and
b) recovery and washing of said polymer sample from said high throughput reaction vessel in an automated manner, said recovery and washing process comprising:
   (i) rinsing said polymer sample from said high throughput reaction vessel into a filtration vessel using a rinse liquid comprising a C5 to C8 paraffinic hydrocarbon, said rinse liquid being additional to any reaction media present during the polymerisation reaction to form the polymer sample, and providing in said filtration vessel a mixture comprising the polymer sample, rinse liquid and an oxygenate, said oxygenate having 2 to 8 carbon atoms and being selected from one or more of an alcohol, an ether, an aldehyde and a ketone,
   (ii) removing the rinse liquid and oxygenate from the polymer sample in said filtration vessel by filtration, and
   (iii) subsequently washing said polymer sample in said filtration vessel to remove any residual rinse liquid comprising C5 to C8 paraffinic hydrocarbon.

It has been found that (small scale) polymer samples from a high throughput reaction vessel can be advantageously recovered and washed using the above process.

The high throughput reaction vessel may be any suitable, relatively small scale, reaction vessel for performing high throughput polymerisation reactions.The high throughput reaction vessel is one of a plurality (an array) of high throughput reaction vessels, such as 8 or more, for example 16 or more reaction vessels, which can operate polymerisation reactions in parallel. The polymer samples from the (each) reaction vessel are less than 50g (washed and dried weight), and more typically less than 25g, such as in the range 2 -25g, preferably in the range 10 - 20g.

Any suitable polymerisation reaction may be performed in the high throughput reactions vessel to form the polymer sample. Preferably, the polymer sample is a polyolefin formed by polymerisation or co-polymerisation of a suitable olefinic monomer or monomers, especially a polyethylene or polypropylene sample.

An example of a suitable high throughput reaction apparatus in which the polymerisations can be performed can be found in WO 01/36087.

At the end of the polymerisation reaction, said polymer samples need to be removed from the reaction vessels (the polymerisation reactions are batch reactions and the polymer samples are therefore products of a batch polymerisation).

Rinse liquids comprising a C5 to C8 paraffinic hydrocarbon have been found to be suitable for removal of all the polymer sample from a high throughput reaction vessel without requiring excessive amounts of rinse liquid, whilst any residual rinse liquid still evaporates quickly enough from the reaction vessel for the vessel to be clean and dry enough for subsequent reactions.

For avoidance of doubt, the rinse liquid is used after formation of the polymer sample to rinse (wash) said sample from the high throughput reaction vessel, and is additional to any reaction media that may be present during the polymerisation reaction to form the polymer sample.

Higher molecular weight hydrocarbons are not suitable as rinse liquids because they are too involatile, and the reaction vessel cannot be dried quickly enough before the next reaction. (Another feature of high throughput experimentation being that it is generally desired to perform as many experiments as possible, and hence it is desired to "turn-around" the reaction vessels for further experiments as quickly as possible.)

The rinse liquid may comprise small amounts, such as less than 10% in total (by volume), of non-C5 to C8 paraffinic hydrocarbons, but preferably comprises less than 5% (by volume), such as less than 1% (by volume) of non-C5 to C8 paraffinic hydrocarbons.

The rinse liquid may be a single C5 to C8 hydrocarbon (by which is meant of at least 95% purity) or may comprise a mixture of C5 to C8 hydrocarbons.

More than one rinse liquid may also be used sequentially.

Although a rinse liquid comprising one or more C5 hydrocarbons may be used in the process of the present invention, C5 hydrocarbons generally have relatively low boiling points (pentane has a boiling point of approximately 35°C). Hence, C5 hydrocarbons are relatively volatile which can lead to rapid evaporation of the C5 hydrocarbon from the vessel and incomplete washing of the polymer from the reaction vessel. This has the potential disadvantages that not only is not all of the polymer recovered, but that the reaction vessel is not cleaned efficiently (unless significantly larger amounts of C5 hydrocarbon are used, more rinse cycles are performed and/or C6 to C8 hydrocarbons are also present). In addition, it becomes important that washing with C5 hydrocarbons is done in relatively cool reaction vessels, which can slow the overall high throughput process. If the reaction vessel is not cleaned fully this can have a significant effect on subsequent reactions in the reaction vessel.

Hence, preferably the rinse liquid comprises C6 to C8 hydrocarbons, more preferably at least 90% C6 to C8 hydrocarbons (either as a single hydrocarbon or mixture of C6 to C8 hydrocarbons).

A most preferred rinse liquid comprises at least 80% by volume of C7 paraffinic hydrocarbons, and preferably at least 80% by volume of n-heptane.

The polymer sample is rinsed into a filtration vessel using the rinse liquid. The filtration vessel may be any suitable vessel equipped for subsequently allowing filtration. Typically the filtration vessel comprises a main body, which comprises a suitable filter medium such as a frit or filter paper, typically at or close to the base. The top of the filtration vessel may be open to allow introduction of polymer and rinse liquid from the reaction vessel (and subsequent oxygenates and other components as required) or may be closed (or closable) in such a manner so as to allow the vessel to be positively pressurised to push rinse liquid through the filter medium. Preferably, the filtration vessel is adapted to fit over a vacuum or suction pump to draw liquid from the main body through the filter medium at a suitable filtration station.

Preferably, the filtration vessel comprises a suitable seal, which prevents leakage of material from the base of the filtration vessel.

This seal may, for example, comprise a valve which can be opened prior to filtration of material in the vessel.

Preferably, the filtration vessel is adapted to fit over a vacuum or suction pump, and the seal is opened to allow liquid to be removed from the main body by the vacuum or suction pump.

The seal allows the filtration vessel to be used in removal of polymer material directly from a reactor without worrying about rinse liquid leaking onto process equipment as the vessel is moved, for example to a weighing station and/or to a filtration station as described below. Where a weighing station is present, because material cannot leak from the vessel prior to weighing, subsequent weighing will also be a more accurate reflection of the material unloaded from the reactor.

The seal may be a resealable seal, such as a valve. For example, the seal may be a ball valve.

Most preferably, the filtration vessel comprises a breakable seal, which can be broken prior to filtration of material in the vessel.

The seal may be opened (/broken) manually, but preferably is opened automatically. This may be achieved by having an automatic, e.g. computer controlled, means for opening the seal once the filtration vessel is in position for filtration to occur.

Alternatively, the "act" of positioning the filtration vessel for filtration to occur may automatically result in opening of the seal.

For example, the filtration vessel may be adapted to fit over a vacuum or suction pump, and a spring-loaded valve (such as a non-return valve) may be provided at the base of the filtration vessel, and placing the filtration vessel on the pump will provide a force on the valve that results in the opening of the valve.

Where a breakable seal is used, the breakable seal may be any seal which is secure to liquid when in place, but which can be easily broken. Suitable materials for use as the seal include thin layers of non-porous paper or of plastic.

The seal is broken prior to filtration of material in the filtration vessel, preferably immediately before filtration, and most preferably as the filtration vessel is placed on a suitable filtration station. The seal may be broken by any suitable means, such as a suitably-sized protrusion on which the filtration vessel may be impaled to break the seal, such as a suitable spike.

The filtration medium should be located far enough above the breakable seal such that the breakable seal may be broken without piercing the filtration medium.

The main body of the filtration vessel should be sized to allow the polymer sample and required volumes of rinse and wash liquids, and oxygenate to be held. Generally, the main body can be sized to hold a total volume of 1000ml or less above the filtration medium, and more typically 500 ml or less, although vessels capable of holding significantly larger volumes than this may also be used. Preferably, the main body can be sized to hold a total volume in the range 20-500ml, preferably in the range 200-450ml above the filtration medium.

For example, for recovery and washing of a polymer sample of approximately 20g, the main body may typically need to be sized to hold a total volume of approximately 450ml above the filtration medium (based on approximately 150ml of reaction mixture, approximately 150ml of rinse liquid and approximately 150ml of oxygenate), although the vessels may be sized differently if differing amounts of rinse liquid and/or oxygenate are used.

The filtration vessel may be reusable. Where the filtration vessel comprises a breakable seal, for example, the main body may be separable from the part of the filtration vessel comprising the breakable seal, such that a new breakable seal may be added and the filtration vessel reused.

Preferably, however, the filtration vessel is single use (disposable).

Preferably the main body is made of plastic or similar non-costly material.

The polymer sample in a filtration vessel should comprise as much of the polymer produced during the high throughput test as possible. Preferably, unloading of the polymer sample from the high throughput reaction vessel into the filtration vessel is achieved using an apparatus comprising a stirrer which facilitates unloading of material as described in WO 2004/078330.

Although it has been found that rinse liquids comprising C5 to C8 hydrocarbons provide advantageous removal of polymer sample from the reaction vessel, one potential disadvantage of rinse liquids comprising C5 to C8 hydrocarbons is that some polymer material may dissolve in the rinse liquid, and this polymer would be lost when the rinse liquid is removed by filtration.

In the present invention this potential disadvantage is mitigated by mixing an oxygenate with the polymer sample/rinse liquid before removal of the rinse liquid (and also the oxygenate) by filtration. The oxygenate mixes with the rinse liquid and causes precipitation of polymer dissolved therein. The oxygenate has 2 to 8 carbon atoms and is selected from one or more of an alcohol, an ether, an aldehyde and a ketone. Most preferably the oxygenate is one or more alcohols having 2 to 5 carbon atoms. For example, the alcohol may be a used as a single alcohol or a mixture of alcohols. Ethanol is most preferred.

The oxygenate may be used in any suitable amount relative to the rinse liquid comprising C5 to C8 hydrocarbons required to cause precipitation. Typically, the weight ratio of rinse liquid to oxygenate is in the range 5:1 to 1:5, preferably 3:1 to 1:1.

In one embodiment of the first step of the present invention mixing of the oxygenate with the polymer sample/rinse liquid may be achieved by providing a filtration vessel comprising the oxygenate, and rinsing the polymer sample with the rinse liquid into the filtration vessel already comprising the oxygenate. In a second, preferred, embodiment, the oxygenate is added to the filtration vessel after the polymer sample has been rinsed into the filtration vessel.

In the second step of the process of the present invention, the rinse liquid/oxygenate is removed from the filtration vessel by filtration. This is preferably achieved by passing the filtration vessel comprising said polymer sample and rinse liquid therein (either before or after the oxygenate is introduced to the filtration vessel) to a filtration station which is capable of removing rinse liquid, and other liquid in the filtration vessel, typically by application of a vacuum below the filtration medium of the filtration vessel.

Preferably the filtration vessel comprising polymer sample and rinse liquid is transferred to a filtration station where the oxygenate (and any subsequent washing components) are subsequently added.

In the third step of the present invention, the filtered polymer sample is subsequently washed, whilst in the filtration vessel, to remove any residual rinse liquid. By "washing" is generally meant adding and removing (filtering) a suitable wash liquid. Any suitable wash liquid may be used, and the preferred wash liquids will typically depend on the type of polymerisation reaction which has been performed in the high throughput reaction vessel. However, in generally suitable wash liquids will be those that will not dissolve any of the polymer sample and, at least for a final wash where more than one wash is performed, wash liquids which are relatively volatile, so that the polymer sample can be dried easily. Therefore, low molecular weight (boiling point 100°C or less), polar wash liquids are preferred.

Gas phase polymerisation reactions, for example, may have been performed in the presence of a water soluble salt, which it is desired to remove from the polymer. This may be achieved, for example, by washing, preferably several times, such as three times, with a mixture of water and an alcohol, such as a mixture of water and ethanol, followed by a final wash with an alcohol, such as ethanol, alone.

For slurry phase polymerisation reactions, for example, it may be sufficient simply to have a single wash with an alcohol, such as ethanol.

The process of the present invention is automated. By this, is meant that any manipulation (movement) of the filtration vessel is automated, for example performed using a suitable robot, and the addition and removal of the required rinse and wash liquids, and oxygenates during recovery and washing is automated, for example, using a suitable dispensing robot to add wash liquid and oxygenates to the filtration vessel and/or and a suitable automated valve to apply vacuum or suction to the filtration station to remove the liquids therein. The process may all be under the control of a single computer.

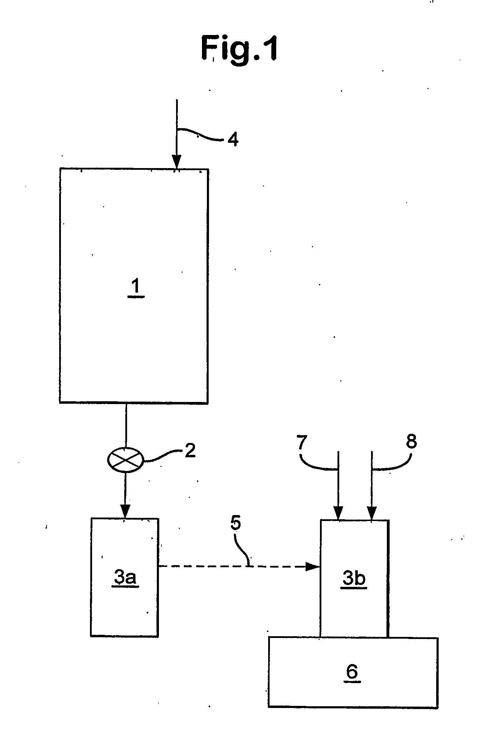

The invention will now be described with respect to Figure 1, which represents schematically a process according to the present invention.

With reference to Figure 1, a polymerization reaction is performed in a high throughput reaction vessel (1). At the end of the reaction (which may be terminated for example by adding a quenchant or other reaction poison, or by venting the reaction gases and cooling (not shown)), a valve at the base of the reaction vessel (2) is opened allowing the polymer sample and any other material, such as diluent, in the reaction vessel (1) to pass into a filtration vessel (shown in position 3a) connected thereto. A rinse liquid (4) is used to rinse the reaction vessel (1), thus rinsing polymer sample remaining in the reaction vessel (1) into the filtration vessel (3a). This provides recovery of all the polymer sample whilst also cleaning the reaction vessel.

The filtration vessel containing the polymer sample is transferred using a robotic device (shown by line 5) to a filtration station (6). The new position of the filtration vessel is shown by 3b. An oxygenate (7) is added to the polymer sample and rinse liquid in the filtration vessel (3b) to precipitate any dissolved polymer and provide a mixture comprising the polymer sample, rinse liquid and oxygenate. The liquids are then removed from the mixture by filtration.

The polymer sample is then washed by adding a wash liquid (8) to the filtration vessel (3b) and removing the wash liquid by filtration using the filtration station (6), to give a washed polymer sample.

### Examples

### Examples of precipitation of polyolefin dissolved in hydrocarbon by addition of oxygenate.

Approximately 0.5g of heptane extractables was redissolved in heptane at 85°C. 10ml aliquots of the heptane solution were taken and various oxygenated solvents were added to them at room temperature.

The results are shown in Table 1 below:

**Table 1**

| Solvent | Volume added | Miscible with heptane ? | Precipitation occurred ? |
|---|---|---|---|
| Methanol | 5ml | No | At interface |
| Ethanol | 5ml | Yes | Yes |
| Propan-1-ol | 5ml | Yes | Yes |
| Propan-2-ol | 5ml | Yes | Yes |
| Acetone | 5ml | Yes | Yes |
| Propan-2-ol and methanol | 2ml propan-2-ol 1 ml methanol | Yes | Yes |

The above results demonstrate that materials which would dissolve in the hydrocarbon solvent can be precipitated by the addition of suitable oxygenates to the heptane.

### Simulation of polymer work-up according to the present invention.

A slurry of 6g of an ethylene/1-hexene copolymer in 200ml of heptane was heated, with stirring, for 1hr in a water bath at 85°C to simulate the conditions at the end of a typical slurry polymerisation. The resulting viscous solution and suspension of fine polymer particles was then cooled in a cold water bath at 30°C for 10 minutes with stirring to simulate the procedure typically used in a polymerisation test.

With stirring, ethanol (100ml) was added to the slightly viscous cloudy suspension by squirting from a syringe. Precipitation of dissolved components occurred to give a suspension of sticky particles in a clear solvent. The sample was filtered, washed with ethanol and dried in an oven overnight at 80°C to yield 5.74g of an inhomogeneous elastomeric solid of small particles stuck together by elastomeric material. Thus, over 95% of the original polymer was recovered. (Some material was also lost on the side of the beaker when transferring for filtration.)

The recovered supernatant was clear but when allowed to evaporate yielded 0.06g of waxy material.

## Claims

1. A process for formation, recovery and washing of polymer sample from a high throughput reaction vessel, said high throughput reaction vessel being one of a plurality of high throughput reaction vessels which operate polymerisation reactions in parallel at small scale to produce a polymer sample of less than 50g (washed and dried weight), said process comprising the steps of:
a) reacting one or monomers in a batch-mode polymerisation reaction in a high throughput reaction vessel to form a polymer sample, and
b) recovery and washing of said polymer sample from said high throughput reaction vessel in an automated manner, said recovery and washing process comprising:
(i) rinsing said polymer sample from said high throughput reaction vessel into a filtration vessel using a rinse liquid comprising a C5 to C8 paraffinic hydrocarbon, said rinse liquid being additional to any reaction media present during the polymerisation reaction to form the polymer sample, and providing in said filtration vessel a mixture comprising the polymer sample, rinse liquid and an oxygenate, said oxygenate having 2 to 8 carbon atoms and being selected from one or more of an alcohol, an ether, an aldehyde and a ketone,
(ii) removing the rinse liquid and oxygenate from the polymer sample in said filtration vessel by filtration, and
(iii) subsequently washing said polymer sample in said filtration vessel to remove any residual rinse liquid comprising C5 to C8 paraffinic hydrocarbon.

2. A process as claimed in claim 1, wherein the polymer samples are less than 25g (washed and dried weight).

3. A process as claimed in claim 1 or claim 2, wherein the rinse liquid comprises at least 80% by volume of C7 paraffinic hydrocarbons, and preferably at least 80% by volume of n-heptane.

4. A process as claimed in any one of the preceding claims, wherein the filtration vessel comprises a main body, said main body comprising a filter material in the lower half of the main body, and wherein below the filter material the filtration vessel comprises a breakable seal, which can be broken prior to filtration of material in the vessel.

5. A process as claimed in claim 4, wherein the main body is sized to hold a total volume of 100ml or less above the filtration medium, and more typically 500 ml or less.

6. A process as claimed in any one of the preceding claims, wherein the oxygenate is a C2 to C5 alcohol.

7. A process as claimed in any one of the preceding claims, wherein, a low molecular weight polar wash liquid with a boiling point of 100°C or less, is used to wash the polymer sample in step (iv).

8. A process as claimed in claim 7, wherein the polymer sample is the product of a gas phase polymerisation reaction performed in the presence of a water soluble salt, and wherein the washing comprises washing several times, such as three times, with a mixture of water and an alcohol, such as a mixture of water and ethanol, followed by a final wash with an alcohol, such as ethanol, alone.

9. A process as claimed in claim 7, wherein the polymer sample is the product of a slurry phase polymerisation reaction, and wherein the washing comprises a single wash with an alcohol, such as ethanol.

## Patentansprüche

1. Verfahren zur Bildung, Gewinnung und Wäsche einer Polymerprobe aus einem Reaktionsbehälter mit hoher Durchsatzleistung, wobei dieser zu einer Vielzahl von Reaktionsbehältern mit hoher Durchsatzleistung gehören, in denen Polymerisationsreaktionen im Parallelbetrieb in kleinem Umfang eine Polymerprobe von weniger als 50 g (Wasch- und Trockengewicht) erzeugen, wobei das Verfahren die Stufen der
a) Umsetzung eines oder Monomere durch chargenweise erfolgende Polymerisationsreaktion in einem Reaktionsbehälter mit hohem Durchsatz unter Bildung einer Polymerprobe und
b) die vollautomatische Abtrennung und Wäsche der Polymerprobe aus dem hohen Durchsatz aufweisenden Reaktionsbehälter umfasst, wobei der Prozess der Gewinnung und Wäsche
(i) die Spülung de Polymerprobe aus dem hohen Durchsatz aufweisenden Reaktionsbehälter in einen Filtrationsbehälter unter Verwendung einer Spülflüssigkeit aus einem C₅₋₈-Paraffinkohlenwasserstoff, die beliebigen Reaktionsmedien während der Polymerisationsreaktion unter Bildung der Polymerprobe zugesetzt wird, wodurch sich im Filtrationsbehälter ein Gemisch ergibt, welches die Polymerprobe, die Spülflüssigkeit und eine mit Sauerstoff angereicherte Verbindung mit 2 bis 8 C-Atomen umfasst, ausgewählt aus einer oder mehreren Verbindungen der Gruppe Alkohol, Ether, Aldehyd und Keton,
(ii) Abtrennung der Spülflüssigkeit und der mit Sauerstoff angereicherten Verbindung aus der Polymerprobe im Filtrationsbehälter durch Filtration und
(iii) die nachfolgende Wäsche der Polymerprobe im Filtrationsbehälter zur Entfernung von restlicher C₅₋₈-Paraffinkohlenwasserstoffe umfassender Spülflüssigkeit, umfasst.

2. Verfahren nach Anspruch1, bei dem die Polymerproben unter 25 g (Wasch- und Trockengewicht) ausmachen.

3. Verfahren nach Anspruch 1 oder 2, bei dem die Spülflüssigkeit mindestens 80 Vol.-% C₇-Paraffinkohlenwasserstoffe und vorzugsweise mindestens 80 Vol.-% n-Heptan umfasst.

4. Verfahren nach einem der vorhergehenden Ansprüche, bei dem der Filtrationsbehälter einen Hauptteil umfasst, der seinerseits ein Filtermaterial in seiner unteren Hälfte umfasst, wobei unterhalb des Filtermaterials der Filtrationsbehälter eine aufbrechbaren Verschluss umfasst, der vor der Filtration des Materials im Behälter aufgebrochen werden kann.

5. Verfahren nach Anspruch 4, wobei der Hauptteil so dimensioniert ist, dass er ein Gesamtvolumen von 1000 ml oder darunter über dem Filtrationsmedium und insbesondere 500 ml oder weniger aufzunehmen vermag.

6. Verfahren nach einem der vorhergehenden Ansprüche, wobei die sauerstoffreiche Verbindung ein C₂₋₅-Alkohol ist.

7. Verfahren nach einem der vorhergehenden Ansprüche, wobei eine polare Waschflüssigkeit mit niederem Molekulargewicht mit einem Siedepunkt von 100 °C oder darunter für die Wäsche der Polymerprobe in Schritt (iv) verwendet wird.

8. Verfahren nach Anspruch 7, wobei die Polymerprobe das Produkt einer Gasphasenpolymerisationsreaktion, durchgeführt in Anwesenheit eines wasserlöslichen Salzes ist, und worin die Wäsche mehrere Waschvorgänge wie z.B. 3-malige Wäsche mit einem Gemisch aus Wasser und einem Alkohol wie einem Gemische aus Wasser und Ethanol, gefolgt von einer Endwäsche mit einem Alkohol wie Ethanol allein, umfasst.

9. Verfahren nach Anspruch 7, wobei die Polymerprobe das Produkt einer Aufschlämmungspolymerisationsreaktion ist und die Wäsche einen einzigen Waschvorgang mit einem Alkohol wie Ethanol umfasst.

## Revendications

1. Procédé pour la formation, la récupération et le lavage d'un échantillon polymère à partir d'une cuve de réaction à capacité de traitement élevée, ladite cuve de réaction à capacité de traitement élevée étant une de plusieurs cuves de réaction à capacité de traitement élevée qui réalisent des réactions de polymérisation en parallèle à petite échelle pour produire un échantillon polymère inférieur à 50 g (masse lavée et séchée), ledit procédé comprenant les étapes consistant :
a) à faire réagir un ou des monomères dans une réaction de polymérisation en mode discontinu dans une cuve de réaction à capacité de traitement élevée pour former un échantillon polymère, et
b) à récupérer et à laver ledit échantillon polymère de ladite cuve de réaction à capacité de traitement élevée de manière automatisée, ledit procédé de récupération et de lavage comprenant :
(i) le rinçage dudit échantillon polymère de ladite cuve de réaction à capacité de traitement élevée dans une cuve de filtration utilisant un liquide de rinçage comprenant un hydrocarbure paraffinique en C5 à C8, ledit liquide de rinçage s'ajoutant au milieu de réaction présent pendant la réaction de polymérisation pour former l'échantillon polymère, et la fourniture dans ladite cuve de filtration d'un mélange comprenant l'échantillon polymère, le liquide de rinçage et un produit d'oxygénation, ledit produit d'oxygénation ayant de 2 à 8 atomes de carbone et étant choisi parmi un ou plusieurs d'un alcool, d'un éther, d'un aldéhyde et d'une cétone,
(ii) l'élimination du liquide de rinçage et du produit d'oxygénation de l'échantillon polymère dans ladite cuve de filtration par filtration, et
(iii) le lavage subséquent dudit échantillon polymère dans ladite cuve de filtration pour éliminer tout liquide de rinçage résiduel comprenant un hydrocarbure paraffinique en C5-C8.

2. Procédé selon la revendication 1, dans lequel les échantillons polymères sont inférieurs à 25 g (masse lavée et séchée).

3. Procédé selon la revendication 1 ou la revendication 2, dans lequel le liquide de rinçage comprend au moins 80 % en volume d'hydrocarbures paraffiniques en C7, et de préférence au moins 80 % en volume de n-heptane.

4. Procédé selon l'une quelconque des revendications précédentes, dans lequel la cuve de filtration comprend un corps principal, ledit corps principal comprenant une matière de filtre dans la moitié inférieure du corps principal, et dans lequel la cuve de filtration comprend, sous la matière de filtre, une étanchéité pouvant être rompue, laquelle peut être rompue avant la filtration de matière dans la cuve.

5. Procédé selon la revendication 4, dans lequel le corps principal est dimensionné pour contenir un volume total de 1 000 ml ou inférieur au-dessus du milieu de filtration, et plus typiquement de 500 ml ou inférieur.

6. Procédé selon l'une quelconque des revendications précédentes, dans lequel le produit d'oxygénation est un alcool en C2 à C5.

7. Procédé selon l'une quelconque des revendications précédentes, dans lequel on utilise un liquide de lavage polaire de faible masse moléculaire avec un point d'ébullition de 100°C ou inférieur pour laver l'échantillon polymère dans l'étape (iv).

8. Procédé selon la revendication 7, dans lequel l'échantillon polymère est le produit d'une réaction de polymérisation en phase gazeuse réalisée en présence d'un sel soluble dans l'eau, et dans lequel le lavage comprend un lavage en plusieurs fois, tel que trois fois, avec un mélange d'eau et d'un alcool, tel qu'un mélange d'eau et d'éthanol, suivi par un lavage final avec un alcool, tel que l'éthanol, seul.

9. Procédé selon la revendication 7, dans lequel l'échantillon polymère est le produit d'une réaction de polymérisation en phase de suspension, et dans lequel le lavage comprend un seul lavage avec un alcool, tel que l'éthanol.
